# EUROPÄISCHE PATENTANMELDUNG

(11) **EP 4 349 636 A1**
(43) Veröffentlichungstag der Anmeldung: **10.04.2024**
(21) Anmeldenummer: 23200409.3
(22) Anmeldetag: 28.09.2023
(51) Int. Cl.: B60L 5/22

(54) **TRÄGERANORDNUNG FÜR EINEN STROMABNEHMER, KIT UND STROMABNEHMER**

(30) Priorität: 30.09.2022 AT 507552022
(71) Anmelder: Siemens Mobility Austria GmbH, 1210 Wien (AT)
(72) Erfinder: Perebner, Stefan, 3385 Gerersdorf (AT); Schletter, Stefan, 1130 Wien (AT); Havlicek, Georg, 1190 Wien (AT); Wressnigg, Thomas, 2372 Gießhübl (AT)
(74) Vertreter: Siemens Patent Attorneys

(57) **Zusammenfassung**

Die Erfindung bezieht sich auf eine Trägeranordnung für einen Stromabnehmer für ein Schienenfahrzeug, mit einem Träger (16), mit welchem ein Stromabnehmergestänge (1) und zumindest ein erster Stützer (7) verbindbar sind.

Es wird vorgeschlagen, dass mit dem Träger (16) zumindest ein auskragendes erstes Distanzstück (17), welches an einem Umfang (22) des Trägers (16) von dem Träger (16) zumindest teilweise parallel zu einer Trägerquerachse (30) oder zumindest teilweise parallel zu einer Trägerlängsachse (29) abstehend angeordnet ist und mit welchem der zumindest erste Stützer (7) verbindbar ist, verbunden ist, wobei der Träger (16) eine Mehrzahl an Montagepositionen für das zumindest erste Distanzstück (17) aufweist.

Dadurch wird ein flexibler Einsatz der Trägeranordnung ermöglicht.

## Beschreibung

Die Erfindung betrifft eine Trägeranordnung für einen Stromabnehmer für ein Schienenfahrzeug, mit einem Träger, mit welchem ein Stromabnehmergestänge und zumindest ein erster Stützer verbindbar sind.

Elektrisch betriebene Schienenfahrzeuge weisen häufig Stromabnehmer (z.B. Einholm- oder Scherenstromabnehmer etc.) auf, mittels welchen eine Stromabnahme von einem Fahrdraht oder von einer Stromschiene etc. sowie eine Versorgung von elektrischen Antrieben der Fahrzeuge mit Elektrizität erfolgt.

Positionen auf oder an einem Schienenfahrzeug zur Montage eines Stromabnehmers können von Schienenfahrzeug zu Schienenfahrzeug unterschiedlich sein. Häufig sind daher fahrzeugspezifische Stromabnehmerträger oder Stromabnehmergrundrahmen erforderlich, welche an die genauen Stromabnehmer-Montagepositionen auf oder an einem bestimmten Schienenfahrzeug angepasst sind (beispielweise durch Wahl entsprechender Dimensionen einer Schweißkonstruktion) und welche ausschließlich auf oder an diesem bestimmten Schienenfahrzeug eingesetzt werden können. Dies kann zu einer großen Variantenvielfalt dieser Stromabnehmerträger oder Stromabnehmergrundrahmen führen.

Aus dem Stand der Technik ist beispielsweise die EP 2 644 433 A2 bekannt, welche ein Fahrzeug mit einem Stromabnehmer zeigt. Ein Unterarm und ein Stellglied des Stromabnehmers sind gelenkig mit einem Rahmen verbunden. Über den Rahmen ist der Stromabnehmer auf dem Fahrzeug abgestützt.

Weiterhin beschreibt die EP 3 912 845 A1 einen Dachstromabnehmer eines Schienenfahrzeugs mit einem Stromabnehmergestänge, dessen Unterarm und dessen Kuppelstange gelenkig mit einem Grundrahmen gekoppelt sind.

Der Grundrahmen ist über als Isolatoren ausgebildete Stützer mit einem Dach des Schienenfahrzeugs verbunden.

Der Erfindung liegt die Aufgabe zugrunde, eine einfach an verschiedene Schienenfahrzeuge anpassbare Trägeranordnung für einen Stromabnehmer anzugeben.

Erfindungsgemäß wird diese Aufgabe gelöst mit einer Trägeranordnung nach Anspruch 1, bei der mit dem Träger zumindest ein auskragendes erstes Distanzstück, welches an einem Umfang des Trägers von dem Träger zumindest teilweise parallel zu einer Trägerquerachse oder zumindest teilweise parallel zu einer Trägerlängsachse abstehend angeordnet ist und mit welchem der zumindest erste Stützer verbindbar ist, verbunden ist, wobei der Träger eine Mehrzahl an Montagepositionen für das zumindest erste Distanzstück aufweist.

Es handelt sich bei der erfindungsgemäßen Trägeranordnung nicht um eine monolithische Vorrichtung, welche in ihrer konstruktiven Auslegung an ein bestimmtes Schienenfahrzeug angepasst werden muss (z.B. durch Wahl entsprechender Seitenlängen eines geschweißten Rahmens etc.). Eine Anpassung an ein bestimmtes Schienenfahrzeug kann bei der erfindungsgemäßen Trägeranordnung vielmehr durch Kombination des Trägers mit einem zu dem jeweiligen Schienenfahrzeug passenden Distanzstück und durch Verbindung des Distanzstücks mit dem Träger an einer zu dem jeweiligen Schienenfahrzeug passenden Position aus der Mehrzahl an Montagepositionen des Trägers vorgenommen werden.

Es wird dadurch eine große Flexibilität erreicht. Der Träger kann aufgrund der modular ausgeführten Trägeranordnung auf oder an unterschiedlichen Schienenfahrzeugen eingesetzt werden, ohne dass konstruktive Anpassungen des Trägers selbst erforderlich sind. Durch diese Maßnahme wird eine Reduktion einer Bauteilevielfalt bewirkt. Eine fahrzeugspezifische Anpassung der Trägeranordnung ist ohne übermäßigen Aufwand möglich. Dadurch wird auch eine einfache Handhabung der erfindungsgemäßen Trägeranordnung bei Schienenfahrzeugbetreibern oder Wartungs- und Instandhaltungseinheiten etc. ermöglicht.

Mit dem ersten Distanzstück kann beispielsweise ein als Isolator ausgeführter erste Stützer verbunden sein, über welchen die Trägeranordnung z.B. auf einem Dach eines Schienenfahrzeugs abgestützt sein kann.

Ferner kann dadurch das erste Distanzstück ausgehend von dem Umfang z.B. nach außen oder nach innen gerichtet sein, wodurch beispielsweise ein Abstand zwischen dem Träger und einem Stützer eingestellt werden kann.

Die Mehrzahl an Montagepositionen für das erste Distanzstück kann beispielsweise an dem Umfang des Trägers angeordnet sein.

Weitere vorteilhafte Ausgestaltungen der erfindungsgemäßen Trägeranordnung ergeben sich aus den Unteransprüchen.

Eine vorteilhafte Lösung wird erreicht, wenn der Träger zumindest ein C-förmiges, ein U-förmiges, ein T-förmiges, ein Doppel-T-förmiges oder ein L-förmiges erstes Profil aufweist, auf welchem die Mehrzahl an Montagepositionen für das zumindest erste Distanzstück angeordnet ist.

Durch diese Maßnahme wird eine hohe Flexibilität bei einer Anordnung der Mehrzahl an Montagepositionen bewirkt. Die Mehrzahl an Montagepositionen kann beispielsweise an einem ersten Schenkel des ersten Profils, welcher z.B. parallel zu einer Seitenfläche des Trägers ausgerichtet ist oder die Seitenfläche bildet, angeordnet sein. Weiterhin ist es beispielsweise möglich, dass die Mehrzahl an Montagepositionen an einem zweiten Schenkel des ersten Profils, welcher z.B. rechtwinklig zu der Seitenfläche des Trägers ausgerichtet ist, angeordnet ist. Denkbar ist es beispielsweise auch, dass der Träger z.B. an seinem Umfang eine Mehrzahl an Profilen aufweist, auf welchen die Mehrzahl an Montagepositionen angeordnet ist.

Es kann auch hilfreich sein, wenn das zumindest erste Distanzstück laschenförmig ausgebildet ist.

Durch diese Maßnahme werden fertigungstechnische Vereinfachungen erzielt. Bei einer Auslegung und Fertigung des laschenförmigen ersten Distanzstück ist eine aufwandsarme Anpassung von Dimensionen des ersten Distanzstücks möglich. Das laschenförmige erste Distanzstück kann beispielsweise eben ausgebildet sein.

Eine hohe Bauteilfestigkeit des ersten Distanzstücks kann erreicht werden, wenn das zumindest erste Distanzstück profilförmig ausgebildet ist.

Vorteilhafte mechanische Eigenschaften der Trägeranordnung und/oder vorteilhafte Distanzüberbrückungseigenschaften des ersten Distanzstücks können auch erhalten werden, wenn das zumindest erste Distanzstück abgewinkelt und/oder gekrümmt ausgebildet ist.

Hierbei ist es beispielsweise auch vorstellbar, dass eine Mehrzahl an z.B. balkenartig ausgeführten Distanzstücken zu einer Leichtbaustruktur zusammengesetzt ist.

Eine verbindungstechnisch einfache Lösung wird erreicht, wenn das zumindest erste Distanzstück kraftschlüssig mit dem Träger verbunden ist.

Beispielsweise kann eine Schrauben-, Klemm- und/oder Steckverbindung zwischen dem ersten Distanzstück und dem Träger vorgesehen sein.

Hilfreich kann es aber auch sein, wenn das zumindest erste Distanzstück formschlüssig mit dem Träger verbunden ist. Beispielsweise kann eine Schwalbenschwanzführung zwischen dem ersten Distanzstück und dem Träger vorgesehen sein. Es ist auch eine kombinierte kraft- und formschlüssige Verbindung zwischen dem ersten Distanzstück und dem Träger denkbar, wie sie beispielsweise durch eine Schraubenverbindung, eine Nietverbindung und/oder eine Verbindung mittels eines Schließringbolzens realisiert werden kann.

Ein einfacher Tausch des ersten Distanzstücks und ein flexibler Einsatz des Trägers werden ermöglicht, wenn das zumindest erste Distanzstück lösbar mit dem Träger verbunden ist.

Ein hoher fertigungstechnischer Aufwand für den Träger wird vermieden und eine hohe Flexibilität bei einer Positionierung des ersten Distanzstücks wird ermöglicht, wenn die Mehrzahl an Montagepositionen für das zumindest erste Distanzstück als Lochraster ausgebildet ist.

Eine Massenreduktion der Trägeranordnung kann bewirkt werden, wenn der Träger rahmenförmig ausgebildet ist.

Eine Vorzugslösung erhält man, wenn das zumindest erste Distanzstück parallel oder annähernd parallel zu einer von der Trägerlängsachse und der Trägerquerachse gebildeten Grundebene des Trägers ausgerichtet ist.

In diesem Zusammenhang kann es hilfreich sein, wenn zumindest ein erstes Verbindungsmittel zwischen dem zumindest ersten Distanzstück und dem Träger rechtwinklig oder annähernd rechtwinklig zu der Grundebene des Trägers ausgerichtet ist. Durch diese Maßnahme kann auf Falze etc. auf dem ersten Distanzstück zur Verbindung des ersten Verbindungsmittels mit dem ersten Distanzstück verzichtet werden.

Eine hohe Flexibilität für eine Verbindung z.B. eines Stützers mit dem ersten Distanzstück wird ermöglicht, wenn das zumindest erste Distanzstück eine Mehrzahl an Distanzstück-Montagepositionen zur Verbindung des zumindest ersten Distanzstücks mit einem ersten Stützer aufweist.

Ein erfolgversprechendes Anwendungsgebiet für die Trägeranordnung wird mit einem Stromabnehmer für ein Schienenfahrzeug mit einer erfindungsgemäßen Trägeranordnung erschlossen, wobei ein Stromabnehmergestänge und zumindest ein erster Stützer des Stromabnehmers mit der Trägeranordnung verbunden sind, und wobei der zumindest erste Stützer über zumindest ein auskragendes erstes Distanzstück der Trägeranordnung mit einem Träger der Trägeranordnung verbunden ist.

Der erste Stützer kann beispielsweise als Isolator ausgebildet sein. Über den ersten Stützer kann das Stromabnehmergestänge z.B. auf einem Dach eines Schienenfahrzeugs abgestützt sein.

Nachfolgend wird die Erfindung anhand von Ausführungsbeispielen näher erläutert.

Es zeigen beispielhaft:

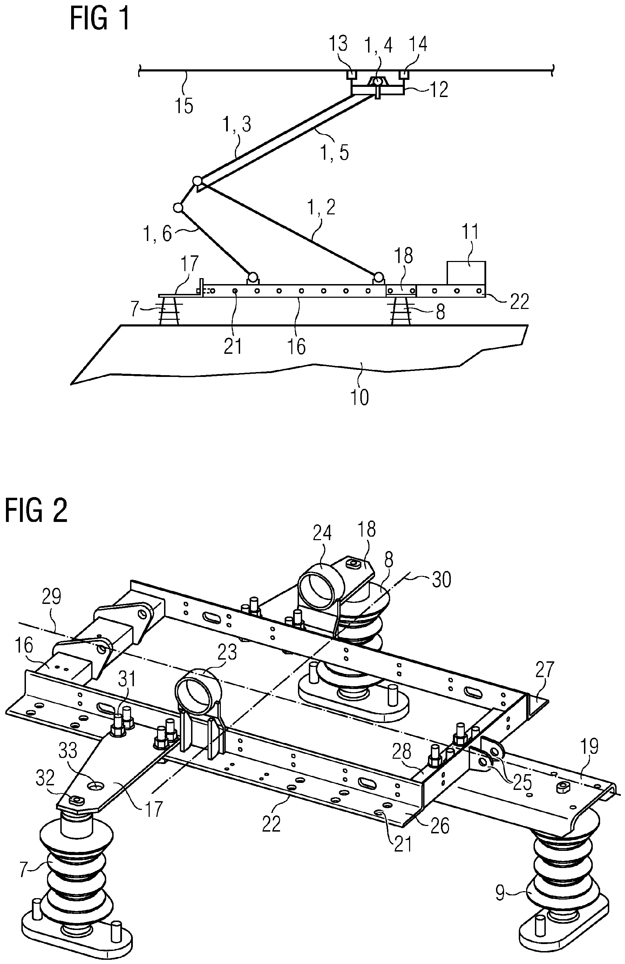

- Fig. 1:: Eine schematische Darstellung einer beispielhaften Ausführungsvariante eines mit einem Schienenfahrzeug verbundenen erfindungsgemäßen Stromabnehmers mit einer beispielhaften ersten Ausführungsvariante einer erfindungsgemäßen Trägeranordnung als Seitenriss,
- Fig. 2:: Einen Schrägriss einer beispielhaften zweiten Ausführungsvariante einer erfindungsgemäßen Trägeranordnung für einen Stromabnehmer mit einem rahmenförmigen Träger, einem laschenförmigen ersten Distanzstück, einem laschenförmigen zweiten Distanzstück sowie einem profilförmigen dritten Distanzstück,

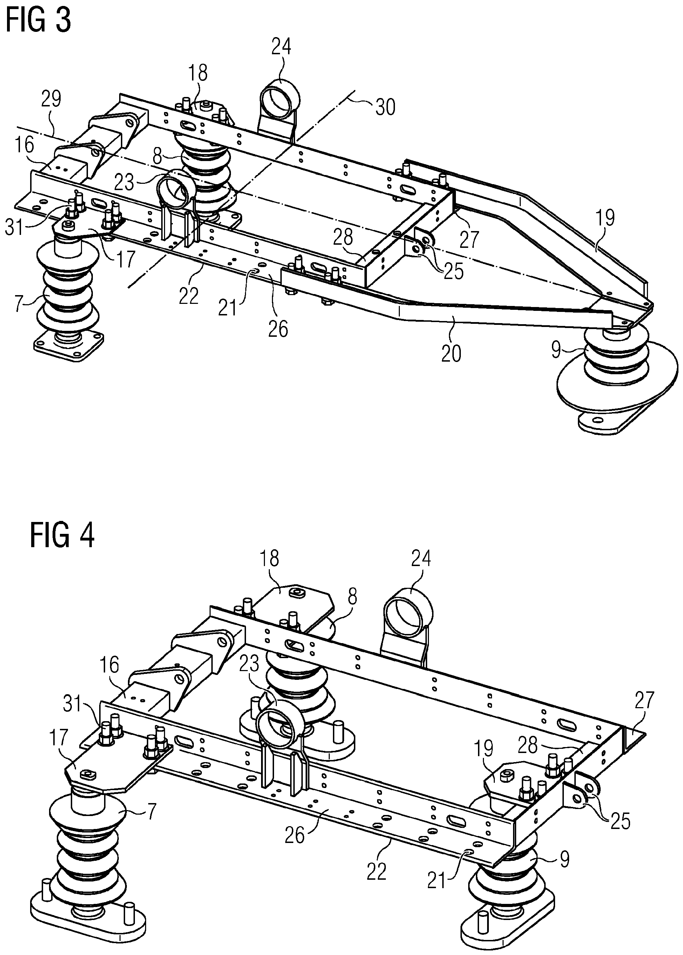

- Fig. 3:: Einen Schrägriss einer beispielhaften dritten Ausführungsvariante einer erfindungsgemäßen Trägeranordnung für einen Stromabnehmer mit einem rahmenförmigen Träger, einem laschenförmigen ersten Distanzstück, einem laschenförmigen zweiten Distanzstück, einem profilförmigen, abgewinkelten dritten Distanzstück sowie einem profilförmigen, abgewinkelten vierten Distanzstück, und
- Fig. 4:: Einen Schrägriss einer beispielhaften vierten Ausführungsvariante einer erfindungsgemäßen Trägeranordnung für einen Stromabnehmer mit einem rahmenförmigen Träger, einem laschenförmigen ersten Distanzstück, einem laschenförmigen zweiten Distanzstück sowie einem laschenförmigen dritten Distanzstück.

Ein in Fig. 1 dargestellter schematischer Seitenriss zeigt eine beispielhafte Ausführungsvariante eines erfindungsgemäßen Stromabnehmers mit einem Stromabnehmergestänge 1, welches einen Unterarm 2, einen Oberarm 3, eine Scheitelstange 4 mit einem ersten Auflaufhorn und einem in Fig. 1 nicht sichtbaren zweiten Auflaufhorn, eine Parallelführungsstange 5 sowie eine Kuppelstange 6 aufweist. Der Unterarm 2 sowie die Kuppelstange 6 sind gelenkig mit einer beispielhaften ersten Ausführungsvariante einer erfindungsgemäßen Trägeranordnung verbunden, welche über einen ersten Stützer 7 des Stromabnehmers, einen zweiten Stützer 8 des Stromabnehmers sowie einen in Fig. 1 nicht sichtbaren dritten Stützer des Stromabnehmers, welche als Isolatoren ausgeführt sind, mit einem Dach 10 eines Schienenfahrzeugs verbunden ist. Zwischen der Trägeranordnung und dem Unterarm 2 ist ein pneumatischer Hebeantrieb 11 zum Heben und Senken des Stromabnehmers vorgesehen.

Der Oberarm 3 ist gelenkig mit dem Unterarm 2 sowie gelenkig mit der Kuppelstange 6 verbunden, die Parallelführungsstange 5 gelenkig mit dem Unterarm 2.

Mit der Scheitelstange 4 ist eine Wippe 12 des Stromabnehmers gelenkig verbunden, welche eine erste Schleifleiste 13 sowie eine zweite Schleifleiste 14 aufweist. Die erste Schleifleiste 13 und die zweite Schleifleiste 14 kontaktieren einen Fahrdraht 15, wodurch das Schienenfahrzeug mit Elektrizität versorgt wird.

Die Trägeranordnung umfasst einen rahmenförmigen Träger 16, welcher als metallische Schweißkonstruktion ausgeführt ist und auf welchem der Hebeantrieb 11 angeordnet ist, sowie ein auskragendes, laschenförmig ausgebildetes erstes Distanzstück 17, ein auskragendes, laschenförmig ausgebildetes zweites Distanzstück 18 sowie ein in Fig. 1 nicht sichtbares, auskragendes, laschenförmig ausgebildetes drittes Distanzstück.

Auf dem Träger 16 sind der Unterarm 2 und die Kuppelstange 6 des Stromabnehmergestänges 1 gelenkig gelagert.

Das erste Distanzstück 17, das zweite Distanzstück 18 und das dritte Distanzstück sind über Montagepositionen des Trägers 16, welche als Lochraster mit einem ersten Montageloch 21 sowie weiteren Montagelöchern ausgebildet und an einem Umfang 22 des Trägers 16 angeordnet sind, mit dem Träger 16 verschraubt, d.h. kraftschlüssig, formschlüssig und lösbar mit diesem verbunden. Zur Verschraubung mit dem Träger 16 weisen das erste Distanzstück 17, das zweite Distanzstück 18 und das dritte Distanzstück falzartige, abgewinkelte Abschnitte auf.

Das erste Distanzstück 17 ist an einer Vorderseite des Trägers 16 mit dem Träger 16 verbunden, das zweite Distanzstück 18 an einer ersten Seitenflanke des Trägers 16 und das dritte Distanzstück an einer in Fig. 1 nicht sichtbaren, der ersten Seitenflanke gegenüberliegenden zweiten Seitenflanke des Trägers 16.

Das erste Distanzstück 17 ist mit dem ersten Stützer 7 fest verbunden, das zweite Distanzstück 18 mit dem zweiten Stützer 8 und das dritte Distanzstück mit dem dritten Stützer. Somit ist der Träger 16 über das erste Distanzstück 17, das zweite Distanzstück 18 und das dritte Distanzstück mit dem ersten Stützer 7, dem zweiten Stützer 8 und dem dritten Stützer verbunden.

In Fig. 2 ist ein Schrägriss einer beispielhaften zweiten Ausführungsvariante einer erfindungsgemäßen Trägeranordnung für einen Stromabnehmer für ein Schienenfahrzeug dargestellt. Die Trägeranordnung umfasst einen metallischen, rahmenförmigen Träger 16, ein auskragendes, ebenes, laschenförmiges erstes Distanzstück 17, ein auskragendes, ebenes, laschenförmiges zweites Distanzstück 18 sowie ein auskragendes, C-profilförmiges drittes Distanzstück 19.

Mit dem Träger 16 sind eine erste Lagerkonsole 23 und eine zweite Lagerkonsole 24 verschweißt, mit welchen ein Unterarm 2 eines Stromabnehmergestänges 1, wie es beispielhaft in Fig. 1 gezeigt ist, gelenkig gekoppelt werden kann. Die erste Lagerkonsole 23 ist an einer ersten Seitenflanke des Trägers 16 angeordnet, die zweite Lagerkonsole 24 an einer der ersten Seitenflanke gegenüberliegenden zweiten Seitenflanke des Trägers 16.

An einer Vorderseite des Trägers 16 ist weiterhin eine zweiteilige dritte Lagerkonsole 25 mit dem Träger 16 verschweißt, mit welcher eine Kuppelstange 6 des Stromabnehmergestänges 1 gelenkig gekoppelt werden kann.

Das erste Distanzstück 17, das zweite Distanzstück 18 und das dritte Distanzstück 19 sind an einem Umfang 22 des Trägers 16, welcher eine Mehrzahl an Montagepositionen für das erste Distanzstück 17, das zweite Distanzstück 18 und das dritte Distanzstück 19 aufweist, von dem Träger 16 abstehend angeordnet. Die Mehrzahl an Montagepositionen ist als Lochraster mit einem ersten Montageloch 21 sowie weiteren Montagelöchern ausgebildet.

Über einige dieser Montagelöcher sind das erste Distanzstück 17, das zweite Distanzstück 18 und das dritte Distanzstück 19 mit dem Träger 16 verschraubt, d.h. kraftschlüssig, formschlüssig und lösbar mit dem Träger 16 verbunden.

Das Lochraster ist an einem L-förmigen ersten Profil 26 des Trägers 16, an einem L-förmigen zweiten Profil 27 des Trägers 16 und an einem L-förmigen dritten Profil 28 des Trägers 16 angeordnet. Schenkel des ersten Profils 26, des zweiten Profils 27 und des dritten Profils 28 bilden Seitenflächen des Trägers 16.

Das erste Profil 26 ist an der ersten Seitenflanke des Trägers 16, von dem ersten Träger 16 abstehend angeordnet. Das zweite Profil 27 ist an der zweiten Seitenflanke des Trägers 16, von dem Träger 16 abstehend angeordnet.

Das dritte Profil 28 ist an der Vorderseite des Trägers 16 angeordnet.

Erfindungsgemäß ist es auch denkbar, dass das erste Profil 26, das zweite Profil 27 und das dritte Profil 28 beispielsweise als C-förmige, U-förmige, T-förmige, oder Doppel-T-förmige Profile ausgeführt sind.

Das erste Distanzstück 17 ist mit einer ersten Profiloberseite des ersten Profils 26 verbunden, das zweite Distanzstück 18 mit einer zweiten Profiloberseite des zweiten Profils 27 und das dritte Distanzstück 19 mit einer Profilunterseite des dritten Profils 28.

Das erste Distanzstück 17, das zweite Distanzstück 18 und das dritte Distanzstück 19 sind parallel zu einer von einer Trägerlängsachse 29 und einer Trägerquerachse 30 gebildeten Grundebene des Trägers 16 ausgerichtet. Eine in Fig. 2 nicht gezeigte Trägerhochachse des Trägers 16 ist rechtwinklig zu der Trägerlängsachse 29 und rechtwinklig zu der Trägerquerachse 30 ausgerichtet.

Das erste Distanzstück 17 und das zweite Distanzstück 18 sind von dem Träger 16 parallel zu der Trägerquerachse 30 abstehend ausgerichtet. Das dritte Distanzstück 19 ist von dem Träger 16 parallel zu der Trägerlängsachse 29 abstehend ausgerichtet.

Ein als erste Schraube ausgebildetes erstes Verbindungsmittel 31 zwischen dem ersten Distanzstück 17 und dem Träger 16 sowie als weitere Schrauben ausgebildete weitere Verbindungsmittel zwischen dem ersten Distanzstück 17, dem zweiten Distanzstück 18 und dem dritten Distanzstück 19 einerseits und dem Träger 16 andererseits sind rechtwinklig zu der Grundebene des Trägers 16 ausgerichtet.

Das erste Distanzstück 17 ist an einer ersten Oberseite eines ersten Stützers 7 mit dem ersten Stützer 7 verbunden, das zweite Distanzstück 18 an einer zweiten Oberseite eines zweiten Stützers 8 mit dem zweiten Stützer 8 und das dritte Distanzstück 19 an einer dritten Oberseite eines dritten Stützers 9 mit dem dritten Stützer 9.

Der erste Stützer 7, der zweite Stützer 8 und der dritte Stützer 9 sind als Isolatoren ausgeführt und können auf einem Dach 10 eines Schienenfahrzeugs, wie es beispielhaft in Fig. 1 dargestellt ist, angeordnet sein.

Das erste Distanzstück 17 und das zweite Distanzstück 18 weisen jeweils zwei Distanzstück-Montagepositionen zur Verbindung des ersten Distanzstücks 17 mit dem ersten Stützer 7 und des zweiten Distanzstücks 18 mit dem zweiten Stützer 8 auf. Der erste Stützer 7 ist hierbei über ein erstes Distanzstück-Montageloch 32 des ersten Distanzstücks 17 mit dem ersten Distanzstück 17 verbunden, kann aber alternativ auch über ein zweites Distanzstück-Montageloch 33 des ersten Distanzstücks 17 mit dem ersten Distanzstück 17 verbunden sein.

Fig. 3 offenbart einen Schrägriss einer beispielhaften dritten Ausführungsvariante einer erfindungsgemäßen Trägeranordnung für einen Stromabnehmer für ein Schienenfahrzeug.

Die Trägeranordnung gemäß Fig. 3 ähnelt jener beispielhaften zweiten Ausführungsvariante einer erfindungsgemäßen Trägeranordnung, wie sie in Fig. 2 gezeigt ist. Es werden daher in Fig. 3 teilweise gleiche Bezugszeichen wie in Fig. 2 verwendet.

Im Unterschied zu jener in Fig. 2 dargestellten beispielhaften zweiten Ausführungsvariante einer erfindungsgemäßen Trägeranordnung weist die Trägeranordnung nach Fig. 3 neben einem auskragenden ersten Distanzstück 17, einem auskragenden zweiten Distanzstück 18 und einem auskragenden dritten Distanzstück 19 auch ein auskragendes viertes Distanzstück 20 auf, welches mit dem dritten Distanzstück 19 eine Struktur bildet.

Das erste Distanzstück 17 ist mit einer ersten Profiloberseite eines L-förmigen ersten Profils 26, welches an einer ersten Seitenflanke eines Trägers 16 der Trägeranordnung angeordnet ist, verschraubt, das zweite Distanzstück 18 mit einer zweiten Profiloberseite eines L-förmigen zweiten Profils 27, welches an einer der ersten Seitenflanke des Trägers 16 gegenüberliegenden zweiten Seitenflanke des Trägers 16 angeordnet ist.

Der Träger 16 weist an seinem Umfang 22 eine Mehrzahl an Montagepositionen für das erste Distanzstück 17, das zweite Distanzstück 18, das dritte Distanzstück 19 und das vierte Distanzstück 20 auf. Diese Mehrzahl an Montagepositionen ist als Lochraster ausgeführt.

Das laschenförmige und ebene erste Distanzstück 17 ist mit einem ersten Stützer 7 verbunden, das laschenförmige und ebene zweite Distanzstück 18 mit einem zweiten Stützer 8. Im Vergleich mit jener beispielhaften zweiten Ausführungsvariante einer erfindungsgemäßen Trägeranordnung nach Fig. 2 sind das erste Distanzstück 17 und das zweite Distanzstück 18 gemäß Fig. 3 kürzer ausgeführt, der erste Stützer 7 und der zweite Stützer 8 weisen geringere Abstände zu dem Träger 16 auf und der dritte Stützer 9 weist einen größeren Abstand zu dem Träger 16 auf, wobei Abmessungen des dritten Distanzstücks 19 und des vierten Distanzstücks 20 passend zu diesem größeren Abstand gewählt sind. Erfindungsgemäß ist es beispielsweise möglich, dass eine Mehrzahl an Distanzstücken unterschiedlicher Längen gemäß Fig. 2 und Fig. 3 zu einem Trägeranordnungskit zusammengefasst sind (z.B. für eine Lagerhaltung in einem Depot) .

Das dritte Distanzstück 19 ist mit der ersten Profiloberseite des ersten Profils 26 verschraubt, das vierte Distanzstück 20 mit der zweiten Profiloberseite des zweiten Profils 27. Das dritte Distanzstück 19 und das vierte Distanzstück 20 sind den Träger 16 teilweise einfassend angeordnet und zu einem Bereich vor dem Träger 16 hin, von dem Träger 16 abstehend und V-förmig in Richtung des dritten Stützers 9 einander zugeneigt, ausgerichtet.

Das dritte Distanzstück 19 und das vierte Distanzstück 20 sind profilförmig sowie abgewinkelt ausgeführt und mit einer Oberseite des dritten Stützers 9 verbunden.

Das erste Distanzstück 17, das zweite Distanzstück 18, das dritte Distanzstück 19 und das vierte Distanzstück 20 sind parallel zu einer von einer Trägerlängsachse 29 und einer Trägerquerachse 30 gebildeten Grundebene des Trägers 16 ausgerichtet. Eine in Fig. 3 nicht gezeigte Trägerhochachse des Trägers 16 ist rechtwinklig zu der Trägerlängsachse 29 und rechtwinklig zu der Trägerquerachse 30 ausgerichtet. Das erste Distanzstück 17 und das zweite Distanzstück 18 sind von dem Träger 16 parallel zu der Trägerquerachse 30 abstehend ausgerichtet. Das dritte Distanzstück 19 und das vierte Distanzstück 20 sind von dem Träger 16 teilweise parallel zu der Trägerlängsachse 29 abstehend ausgerichtet.

Ein als erste Schraube ausgebildetes erstes Verbindungsmittel 31 zwischen dem ersten Distanzstück 17 und dem Träger 16 sowie als weitere Schrauben ausgebildete weitere Verbindungsmittel zwischen dem ersten Distanzstück 17, dem zweiten Distanzstück 18, dem dritten Distanzstück 19 und dem vierten Distanzstück 20 einerseits und dem Träger 16 andererseits sind rechtwinklig zu der Grundebene des Trägers 16 ausgerichtet.

Fig. 4 zeigt einen Schrägriss einer beispielhaften vierten Ausführungsvariante einer erfindungsgemäßen Trägeranordnung für einen Stromabnehmer für ein Schienenfahrzeug.

Die Trägeranordnung gemäß Fig. 4 ähnelt jener beispielhaften zweiten Ausführungsvariante einer erfindungsgemäßen Trägeranordnung, wie sie in Fig. 2 gezeigt ist. Es werden daher in Fig. 4 teilweise gleiche Bezugszeichen wie in Fig. 2 verwendet.

Die Trägeranordnung nach Fig. 4 umfasst einen Träger 16, ein auskragendes erstes Distanzstück 17, ein auskragendes zweites Distanzstück 18 und ein auskragendes drittes Distanzstück 19. Im Unterschied zu jener in Fig. 2 dargestellten beispielhaften zweiten Ausführungsvariante einer erfindungsgemäßen Trägeranordnung ist bei der Trägeranordnung gemäß Fig. 4 neben dem ersten Distanzstück 17 und dem zweiten Distanzstück 18 auch das dritte Distanzstück 19 laschenförmig und eben ausgebildet.

Das erste Distanzstück 17 ist mit einer ersten Profiloberseite eines L-förmigen ersten Profils 26, welches an einer ersten Seitenflanke des Trägers 16 angeordnet ist, verschraubt, das zweite Distanzstück 18 mit einer zweiten Profiloberseite eines L-förmigen zweiten Profils 27, welches an einer der ersten Seitenflanke des Trägers 16 gegenüberliegenden zweiten Seitenflanke des Trägers 16 angeordnet ist.

Das dritte Distanzstück 19 ist mit einer dritten Profiloberseite eines L-förmigen dritten Profils 28, welches an einer Vorderseite des Trägers 16 angeordnet ist, verschraubt.

Der Träger 16 weist an seinem Umfang 22 eine Mehrzahl an Montagepositionen für das erste Distanzstück 17, das zweite Distanzstück 18 und das dritte Distanzstück 19 auf. Diese Mehrzahl an Montagepositionen ist als Lochraster ausgebildet.

Das erste Distanzstück 17 ist mit einem ersten Stützer 7 verbunden, das zweite Distanzstück 18 mit einem zweiten Stützer 8, das dritte Distanzstück 19 mit einem dritten Stützer 9.

Im Vergleich mit jener beispielhaften zweiten Ausführungsvariante einer erfindungsgemäßen Trägeranordnung nach Fig. 2 sind das erste Distanzstück 17, das zweite Distanzstück 18 und das dritte Distanzstück 19 gemäß Fig. 4 kürzer ausgeführt und der erste Stützer 7, der zweite Stützer 8 sowie der dritte Stützer 9 weisen geringere Abstände zu dem Träger 16 auf, wobei das dritte Distanzstück 19 in ein von dem Träger 16 begrenztes Volumen hinein gerichtet ist und innerhalb dieses Volumens mit dem dritten Stützer 9 verbunden ist.

### Liste der Bezeichnungen

- 1: Stromabnehmergestänge
- 2: Unterarm
- 3: Oberarm
- 4: Scheitelstange
- 5: Parallelführungsstange
- 6: Kuppelstange
- 7: Erster Stützer
- 8: Zweiter Stützer
- 9: Dritter Stützer
- 10: Dach
- 11: Hebeantrieb
- 12: Wippe
- 13: Erste Schleifleiste
- 14: Zweite Schleifleiste
- 15: Fahrdraht
- 16: Träger
- 17: Erstes Distanzstück
- 18: Zweites Distanzstück
- 19: Drittes Distanzstück
- 20: Viertes Distanzstück
- 21: Erstes Montageloch
- 22: Umfang
- 23: Erste Lagerkonsole
- 24: Zweite Lagerkonsole
- 25: Dritte Lagerkonsole
- 26: Erstes Profil
- 27: Zweites Profil
- 28: Drittes Profil
- 29: Trägerlängsachse
- 30: Trägerquerachse
- 31: Erstes Verbindungsmittel
- 32: Erstes Distanzstück-Montageloch
- 33: Zweites Distanzstück-Montageloch

## Patentansprüche

1. Trägeranordnung für einen Stromabnehmer für ein Schienenfahrzeug, mit einem Träger (16), mit welchem ein Stromabnehmergestänge (1) und zumindest ein erster Stützer (7) verbindbar sind, **dadurch gekennzeichnet, dass** mit dem Träger (16) zumindest ein auskragendes erstes Distanzstück (17), welches an einem Umfang (22) des Trägers (16) von dem Träger (16) zumindest teilweise parallel zu einer Trägerquerachse (30) oder zumindest teilweise parallel zu einer Trägerlängsachse (29) abstehend angeordnet ist und mit welchem der zumindest erste Stützer (7) verbindbar ist, verbunden ist, wobei der Träger (16) eine Mehrzahl an Montagepositionen für das zumindest erste Distanzstück (17) aufweist.

2. Trägeranordnung nach Anspruch 1, **dadurch gekennzeichnet, dass** der Träger (16) zumindest ein C-förmiges, ein U-förmiges, ein T-förmiges, ein Doppel-T-förmiges oder ein L-förmiges erstes Profil (26) aufweist, auf welchem die Mehrzahl an Montagepositionen für das zumindest erste Distanzstück (17) angeordnet ist.

3. Trägeranordnung nach Anspruch 1 oder 2, **dadurch gekennzeichnet, dass** das zumindest erste Distanzstück (17) laschenförmig ausgebildet ist.

4. Trägeranordnung nach Anspruch 1 oder 2 **dadurch gekennzeichnet, dass** das zumindest erste Distanzstück (17) profilförmig ausgebildet ist.

5. Trägeranordnung nach Anspruch 3 oder 4, **dadurch gekennzeichnet, dass** das zumindest erste Distanzstück (17) abgewinkelt und/oder gekrümmt ausgebildet ist.

6. Trägeranordnung nach einem der Ansprüche 1 bis 5, **dadurch gekennzeichnet, dass** das zumindest erste Distanzstück (17) kraftschlüssig mit dem Träger (16) verbunden ist.

7. Trägeranordnung nach einem der Ansprüche 1 bis 6, **dadurch gekennzeichnet, dass** das zumindest erste Distanzstück (17) formschlüssig mit dem Träger (16) verbunden ist.

8. Trägeranordnung nach einem der Ansprüche 1 bis 7, **dadurch gekennzeichnet, dass** das zumindest erste Distanzstück (17) lösbar mit dem Träger (16) verbunden ist.

9. Trägeranordnung nach einem der Ansprüche 1 bis 8, **dadurch gekennzeichnet, dass** die Mehrzahl an Montagepositionen für das zumindest erste Distanzstück (17) als Lochraster ausgebildet ist.

10. Trägeranordnung nach einem der Ansprüche 1 bis 9, **dadurch gekennzeichnet, dass** der Träger (16) rahmenförmig ausgebildet ist.

11. Trägeranordnung nach einem der Ansprüche 1 bis 10, **dadurch gekennzeichnet, dass** das zumindest erste Distanzstück (17) parallel oder annähernd parallel zu einer von der Trägerlängsachse (29) und der Trägerquerachse (30) gebildeten Grundebene des Trägers (16) ausgerichtet ist.

12. Trägeranordnung nach Anspruch 11, **dadurch gekennzeichnet, dass** zumindest ein erstes Verbindungsmittel (31) zwischen dem zumindest ersten Distanzstück (17) und dem Träger (16) rechtwinklig oder annähernd rechtwinklig zu der Grundebene des Trägers (16) ausgerichtet ist.

13. Trägeranordnung nach einem der Ansprüche 1 bis 12, **dadurch gekennzeichnet, dass** das zumindest erste Distanzstück (17) eine Mehrzahl an Distanzstück-Montagepositionen zur Verbindung des zumindest ersten Distanzstücks (17) mit einem ersten Stützer (7) aufweist.

14. Kit mit einer Trägeranordnung nach einem der Ansprüche 1 bis 13, umfassend eine Mehrzahl an Distanzstücken unterschiedlicher Längen.

15. Stromabnehmer für ein Schienenfahrzeug mit einer Trägeranordnung nach einem der Ansprüche 1 bis 13, wobei ein Stromabnehmergestänge (1) und zumindest ein erster Stützer (7) des Stromabnehmers mit der Trägeranordnung verbunden sind, **dadurch gekennzeichnet, dass** der zumindest erste Stützer (7) über zumindest ein auskragendes erstes Distanzstück (17) der Trägeranordnung mit einem Träger (16) der Trägeranordnung verbunden ist.
